# EUROPEAN PATENT APPLICATION

(11) **EP 3 858 540 A1**
(43) Date of publication of application: **04.08.2021**
(21) Application number: 19865214.1
(22) Date of filing: 18.09.2019
(51) Int. Cl.: B23Q 11/10

(54) **FLUID NOZZLE DEVICE FOR MACHINE TOOL**

(30) Priority: 27.09.2018 JP 2018181407
(71) Applicant: Mitsuiseiki Kogyo Kabushiki Kaisha, Saitama, 350-0193 (JP)
(72) Inventor: SEKINE, Atsuhiro, Hiki-gun, Saitama 350-0193 (JP); NAKAMURA, Tetsuya, Hiki-gun, Saitama 350-0193 (JP); YAJIMA, Masahiro, Hiki-gun, Saitama 350-0193 (JP)
(74) Representative: Vossius & Partner Patentanwälte Rechtsanwälte mbB
(86) International application number: PCT/JP2019/036520
(87) International publication number: WO 2020/066782

(57) **Abstract**

[Problems to be solved] To discharge a fluid such as coolant to an optimum position without spending time for nozzle adjustment at the time of tool change by automating the adjustment of the orientation of a plurality of nozzles.

[Means for solving the problems] In a coolant nozzle device having a plurality of nozzles capable of discharging coolant, respectively, the coolant nozzle device comprising; a rotating plate attached around the spindle core and capable of being rotatably controlled, and having a plurality of curved cam grooves which are formed corresponding to each of the plurality of fluid nozzles and which regulate the discharge angle of each of the fluid nozzles and through which the fluid nozzles are provided so that the tool protrudes toward the tip of the tool; driving means for rotatably driving the rotating plate; a control unit for rotating the rotating plate by a predetermined angle in response to replacement of the tool; wherein the control unit receives a tool change command of the machine tool and rotates the rotating plate by a predetermined angle via the driving means, so that the plurality of cam grooves may slide around the spindle core to change the discharge angle of each of the fluid nozzles.

## Description

### Field of the Invention

The present invention relates to a fluid nozzle device that ejects a fluid such as coolant (cutting liquid, etc.) or air in the vicinity of a tool or work of a machine tool, and particularly, to the fluid nozzle device capable of simultaneously varying an injection angle of a plurality of nozzles mounted around a spindle of the machine tool.

### Background technology

When various tools with different lengths and diameters are attached to and held on the spindle of a machine tool in response to changes in machining conditions, the direction in which coolant such as cutting fluid is ejected must be changed and adjusted. Otherwise, it is impossible to optimally supply coolant to the machining point. For this reason, conventionally, even in a machine tool equipped with an automatic tool changer (Automatic Tool Changer, hereinafter abbreviated as ATC) and numerically controlled (Numerical Control, hereinafter abbreviated as NC) capable of automatically changing tools, an operator has manually operated a coolant blowout pipe (spout nozzle) or the like to change the blowout (spout) direction (see, for example, Patent Document 1). In particular, in a fluid nozzle device that ejects a fluid such as coolant from each nozzle mounted around the spindle core to the machining point by a tool at the same time, an operator tries to adjust the direction of the nozzle by hand to use the fluid nozzle device each time according to the length and diameter of the tool used for machining.
In addition, as a proposal to automatically change the coolant supply position in response to changes in the machining point due to tool replacement, the coolant nozzle is rotatably discharged near the spindle, there is also a conventional example of controlling the direction of the tip in response to the changes in the machining point (see Patent Document 2).

### Prior art literature

### Patent Document

Patent Document 1: Japanese Unexamined Patent Publication No. Showa 55-112749
Patent Document 2: Japanese Unexamined Utility Model Publication No. Showa 62-134642

### Summary of the Invention

### Problems to be solved by the invention

In the above-mentioned conventional fluid nozzle device such as a coolant nozzle, for example, it is necessary to manually adjust each of a plurality of nozzles, which takes time to set up and further causes a problem always requiring manpower for each adjustment. Further, in the conventional example described in Patent Document 2 mentioned above, only a coolant nozzle is rotated in the vicinity of the circumferential direction of the spindle to change the discharge position of the coolant toward the spindle. Consequently, there are a limit to the range of tools for which a single nozzle can be used sufficiently, and also a problem that the conventional example cannot respond to changes in tool length at all.
As described above, in the conventional proposal for automating the discharge direction of the coolant nozzle, an example of a solution for automatic adjustment of the blowout (spout) direction of a single nozzle is shown. However, in reality, few effective proposals have been made in order to simultaneously vary each injection angle of a plurality of nozzles mounted around a spindle of the machine tool.

The present invention has been made in view of the above circumstances. It is therefore an object of the present invention to provide a technique capable of discharging a fluid such as the coolant at an optimum position without spending time on nozzle adjustment when changing tools.

### Means for solving the problems

In order to achieve the above object, the present inventors have diligently researched the configuration of a device capable of solving the trouble of manually adjusting the discharge direction of the coolant nozzle, and as a result, have come up with the configuration of a device that can automatically move multiple nozzles at the same time depending on the length and diameter of the tool by providing a mechanism for moving the servomotor and nozzles in the coolant nozzle requiring a plurality of nozzles.

That is, in a machine tool which is provided with a plurality of types of tools having different tool lengths and / or tool diameters, and in which the tools attached to the spindle can be exchanged between the plurality of types of tools, the fluid nozzle device of the present invention having a plurality of fluid nozzles provided in an annular shape around the spindle core and spaced apart from each other toward the tip of the tool, and capable of discharging fluid from the plurality of fluid nozzles, comprising;
a rotating plate attached around the spindle core and capable of being rotatably controlled, and having a plurality of curved cam grooves which are formed corresponding to each of the plurality of fluid nozzles and which regulate the discharge angle of each of the fluid nozzles and through which the fluid nozzles are provided so that the tool protrudes toward the tip of the tool;
driving means for rotatably driving the rotating plate;
a control unit for rotating the rotating plate by a predetermined angle in response to replacement of the tool;
wherein the control unit receives a tool change command of the machine tool and rotates the rotating plate by a predetermined angle via the driving means, so that the plurality of cam grooves may slide around the spindle core to change the discharge angle of each of the fluid nozzles.

With the configuration thus described, by automating the orientation adjustment of the plurality of fluid nozzles, it is possible to discharge the fluid to the optimum position without spending time on the nozzle adjustment when changing the tool.

Herein, the fluid nozzle device has a servomotor as a driving means for rotating and driving the rotating plate, and a plurality of gears that mesh with the rotating shaft of the servomotor. Accordingly, it is characterized that the fluid nozzle device automatically adjusts the tip of the coolant nozzle by the rotation control of the servomotor in response to length and diameter of the tool. Further, it is also characterized that the fluid nozzle device of the present invention has the servomotor, a shaft and gears for transmitting power from the servomotor, and gears for moving the nozzles. With a configuration thus described, the servomotor can be rotated depending on the length and the diameter of the tool, and a plurality of nozzles can be simultaneously moved by the power of the servomotor through the shaft and gears. The shaft is preferably composed of a flex (flexible) shaft. This provides an advantage of increasing the degree of freedom in the mounting position of the servomotor, when the servomotor for rotationally driving the shaft is mounted to the machine tool.

Furthermore, a method for controlling the fluid nozzle device of the present invention is characterized by including a step of moving a plurality of nozzles at the same time according to the length and the diameter of the tool.

### Effect of the invention

According to the present invention, since the orientation adjustment of the plurality of fluid nozzles is automated according to the length and the diameter of the tool, there is an effect of reducing the setup time required for the adjustment each time the tool is changed.

### Brief description of the drawings

[Fig.1] A top view of the machine tool as an example to which the present invention is applied.
[Fig.2] A front view of the machine tool as an example to which the present invention is applied.
[Fig. 3] A side view of the machine tool as an example to which the present invention is applied.
[Fig.4] An external perspective view of the coolant nozzle device of the machine tool according to an embodiment of the present invention.
[Fig.5] A cross-sectional view of the nozzle variable mechanism of the coolant nozzle device shown in Fig.4.
[Fig.6] Front views of the appearance of the coolant nozzle device shown in FIG. 4, showing a difference in nozzle angle. (A) shows a state where the nozzle angle is 0 degrees, and (B) shows a state where the nozzle angle is 30 degrees.
[Fig.7] An operation procedure of the coolant nozzle device in the processing of the machine tool according to an embodiment of the present invention.
[Fig.8] Figures which show the correspondence relationship of the rotation angle of the gear plate and the nozzle angle in the coolant nozzle device shown in FIG. 4, (A) shows the gear plate rotation angle 0 degree in the cross-sectional view of the nozzle variable mechanism, (B) shows a nozzle angle of 0 degrees in the external front view of the coolant nozzle device.
[Fig.9] Figures which show the correspondence relationship of the rotation angle of the gear plate and the nozzle angle in the coolant nozzle device shown in FIG. 4, (A) shows the gear plate rotation angle 20 degrees in the cross-sectional view of the nozzle variable mechanism, (B) shows a nozzle angle of 10 degrees in the external front view of the coolant nozzle device.
[Fig. 10] Figures which show the correspondence relationship of the rotation angle of the gear plate and the nozzle angle in the coolant nozzle device shown in FIG. 4, (A) shows the gear plate rotation angle 30 degrees in the cross-sectional view of the nozzle variable mechanism, (B) shows a nozzle angle of 15 degrees in the external front view of the coolant nozzle device.
[Fig. 11] Cross-sectional views of the nozzle portions in the coolant nozzle device shown in FIG. 4, (A) is the cross-sectional view of the nozzle portion in the state of FIG. 5 (gear plate rotation angle 0 degree, nozzle angle 0 degree), (B ) is the cross-sectional view of the nozzle portion in the state of FIG. 7 (gear plate rotation angle 30 degrees, nozzle angle 15 degrees).
[Fig. 12] Front views of the appearance of the coolant nozzle device shown in FIG. 4, showing a difference in nozzle angle, (A) is a state where the gear plate rotation angle is 0 degree and the nozzle angle is 0 degree, (B) is a state where the gear plate rotation angle is 20 degrees and the nozzle angle is 10 degrees, and (C) is a state where the gear plate rotation angle is 30 degrees and the nozzle angle is 15 degrees.
[Fig. 13] An exploded perspective view of the variable nozzle unit of the coolant nozzle device shown in FIG. 4.
[Fig. 14] A perspective view showing a state in which the tool is attached to the coolant nozzle device shown in FIG. 4.
[Fig.15] A cross-sectional view of the nozzle variable mechanism of the coolant nozzle device according to another embodiment of the present invention.
[Fig. 16] Cross-sectional views of the nozzle portions of the coolant nozzle device according to the another embodiment of the present invention, (A) is a cross-sectional view of the nozzle portion in the nozzle angle 10 degrees, (B) is a cross-sectional view of the nozzle portion in the nozzle angle 30 degrees. Embodiments of the invention

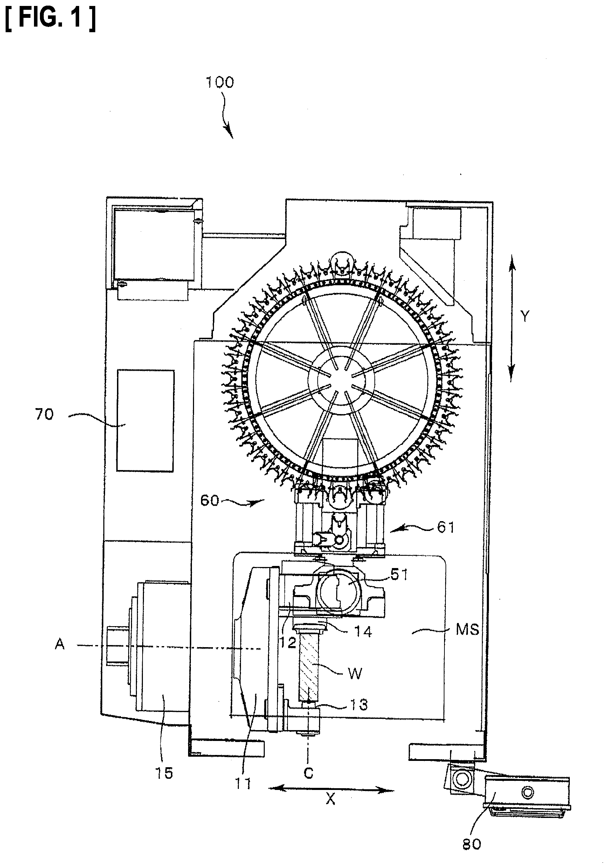

The machine tool to which the fluid nozzle device of the present invention is applied is a machine tool having a plurality of types of tools having different tool lengths and / or tool diameters, and the tools attached to the spindle can be exchanged between the plurality of types of tools. Further, since the fluid nozzle device of the present invention is characterized in that the direction of the nozzle is automatically adjusted, it can be used not only for coolant (cutting fluid) but also for air discharge. Herein, with reference to FIGS. 1 to 3, a case where coolant (cutting fluid) is discharged from an angle-adjustable nozzle will be described as an embodiment of the fluid nozzle device of the present invention. Therefore, at first, a schematic configuration of a machine tool in which the coolant nozzle device of the present embodiment is used will be described. FIG. 1, FIG. 2, and FIG. 3 are a plan view, a front view, and a side view of a machine tool as an example to which the present invention is applied, respectively.

With reference to FIGS. 1 to 3, the machine tool 100 in which the coolant nozzle device 200 of the present embodiment is used is a so-called vertical machine tool, which has a bed 20 as a base, a Y-axis moving body (column) 30 slidable in the direction of the Y-axis with respect to the bed 20, an X-axis moving body 40 slidable in the X-axis direction with respect to the Y-axis moving body 30, and a Z-axis moving body 50 slidable in the Z-axis direction with respect to the X-axis moving body 40. Further, a spindle 51 having an axis in the same direction as the Z-axis is provided at the lower part of the Z-axis moving body 50, and a tool can be attached to the lower end of the spindle 51. The tool attached to the spindle 51 can be rotated around the spindle by a spindle motor (not shown) built in the spindle 51.

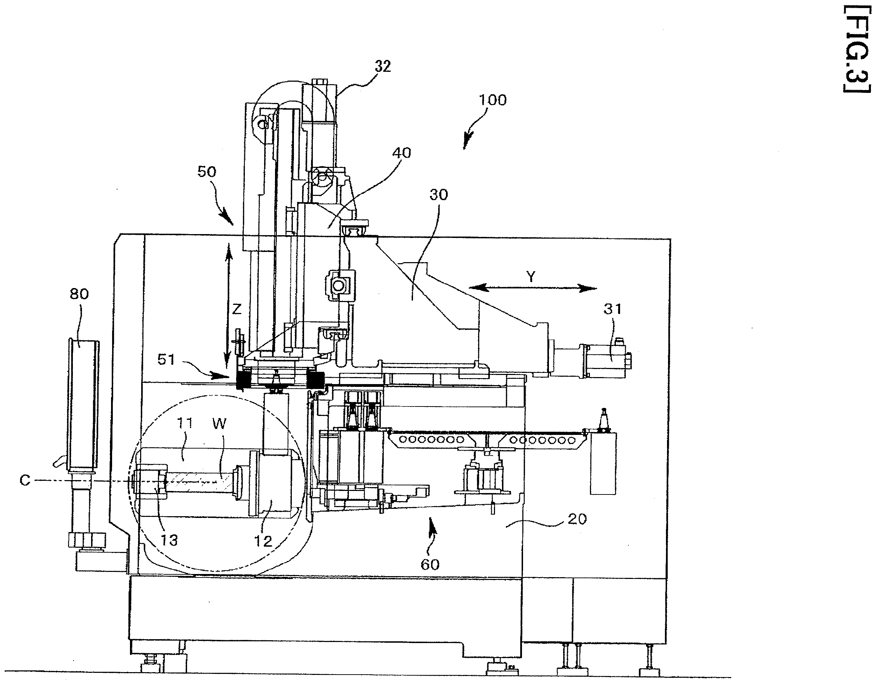

Herein, the Y-axis moving body 30, the X-axis moving body 40, and the Z-axis moving body 50 are driven by the Y-axis drive motor 31, the X-axis drive motor (not shown), and the Z-axis drive motor 32 (FIG. 3), respectively, to move in each axial direction. With the above structure, the tool in the rotating state by the spindle motor can move relative to the bed 20 in three dimensions, and this operation realizes a three-dimensional approach / separation operation with respect to the work W described later. Further, the machine tool 100 includes an automatic tool changing device 60, and the tool gripping and changing mechanism 61 can not only select a desired tool from a plurality of tools, grip and move the tool, then attach the tool to the spindle 51, but also withdraw the tool after machining. Furthermore, the control of the mechanical operation described above and described later is performed by the CNC (Computerized Numerical Control) device 70. Moreover, the machine tool 100 includes an operation / display panel 80. Besides, although the machine tool 100 has various other configurations, they are omitted here.

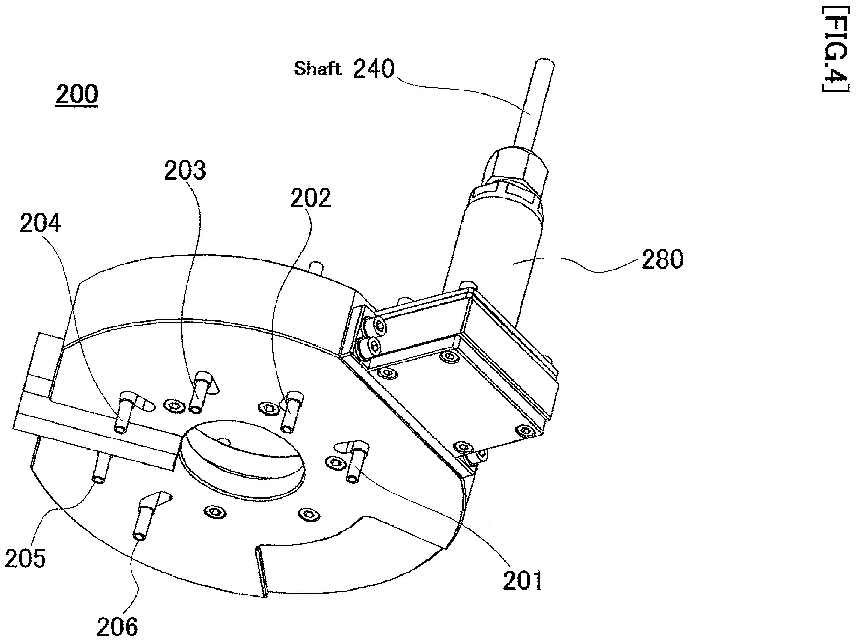

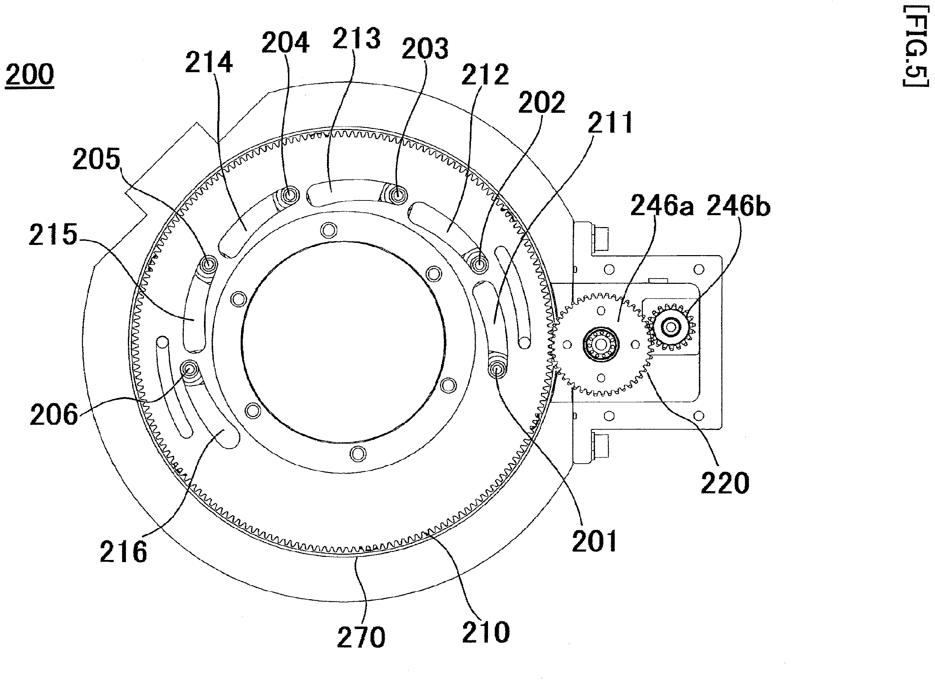

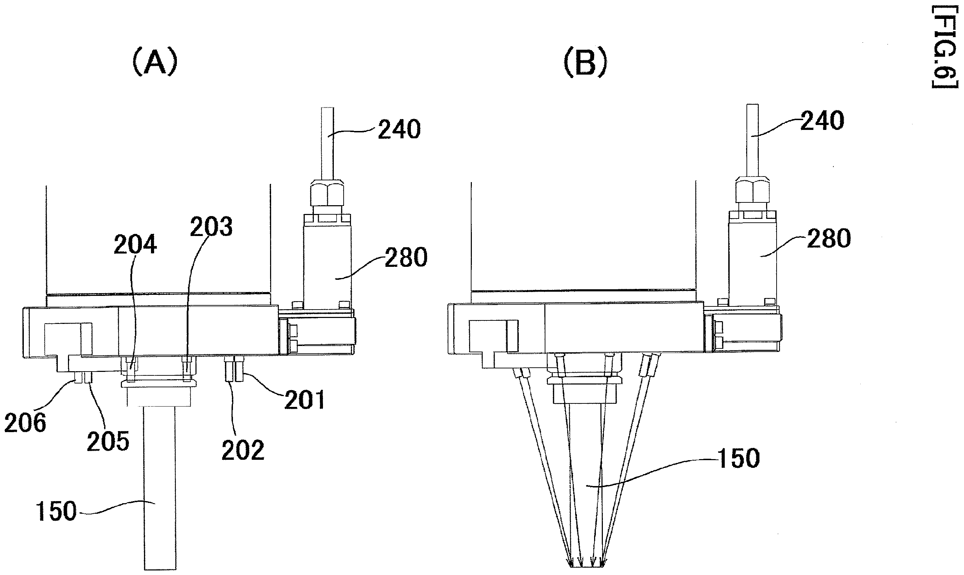

Next, with reference to FIGS. 4 to 6, the configuration of the main part of the coolant nozzle device 200 according to the present embodiment will be described. Fig.4 is an external perspective view of the coolant nozzle device according to this embodiment, Fig.5 is a cross-sectional view of the nozzle variable mechanism of the coolant nozzle device shown in Fig.4, and Fig.6 is a front view of the appearance of the coolant nozzle device shown in FIG. 4, showing a difference in nozzle angle, (A) shows a state where the nozzle angle is 0 degrees, and (B) shows a state where the nozzle angle is 30 degrees. As described above, the coolant nozzle device 200 according to the present embodiment is used in the machine tool 100 which includes, as shown in FIGS. 1 to 3, a plurality of types of tools having different tool lengths and / or tool diameters and in which a tool attached to a spindle can be replaced between the plurality of types of tools.

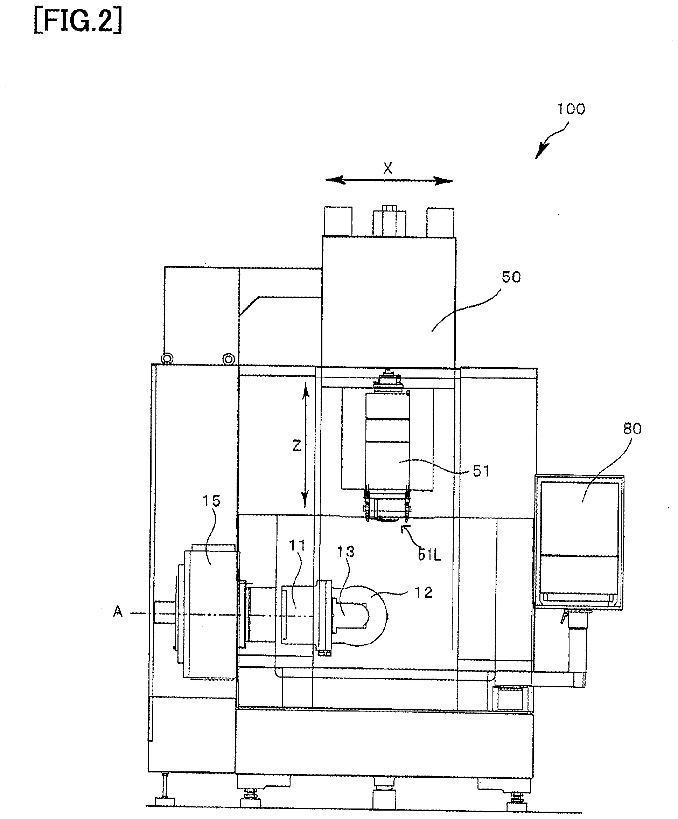

Herein, as shown in FIGS. 4 to 6, the coolant nozzle device 200 according to the present embodiment has a plurality of coolant nozzles 201, 202, 203, 204, 205, and 206 which are provided in an annular shape at intervals toward the tip of the tool 150 (not shown in FIGS. 1 to 3 and see FIG. 6 and the like) around the shaft core of the lower surface side 51L (see FIG. 2) of the main shaft 51 of the machine tool (see FIGS. 1 to 3), and is such a device capable of discharging coolant from each of the plurality of coolant nozzles 201, 202, 203, 204, 205, and 206. The coolant nozzle device 200 comprises a rotating (gear) plate 210 attached around the shaft core of the lower surface side 51L of the main shaft 51 and capable of being rotatably controlled, and having a plurality of curved cam grooves which are formed corresponding to each of the plurality of coolant nozzles and which regulate the discharge angle of each of the coolant nozzles and through which the coolant nozzles are provided to protrude toward the tip of the tool, a motor (not shown) as a driving device which rotates the rotating (gear) plate 210 via a driving mechanism 220, and a nozzle angle control unit (not shown) which rotates the rotating (gear) plate 210 by a predetermined angle in response to replacement of the tool 150 with another tool. The nozzle angle control unit (not shown) is provided in the CNC device 70 (see FIG. 1) of the machine tool 100. Then, when the CNC device 70 issues a change command for the tool 150 to another tool to the above-mentioned automatic tool change device 60, the nozzle angle control unit (not shown) in the CNC device 70 receives this command and rotates the rotating (gear) plate 210 by a predetermined angle via a motor (not shown) as a driving device and a driving mechanism 220. The plurality of cam grooves 211, 212, 213, 214, 215, and 216 thereby slide around the shaft core of the lower surface side 51L of the main shaft 51, respectively, so that the discharge angles of the coolant nozzles 201, 202, 203, 204, 205, and 206 can be changed. Herein, as shown in FIG. 5, the cam grooves 211, 212, 213, 214, 215, and 216 are not formed to have uniform groove widths, but are curved so as to be inclined toward the axis side. By being so formed, the nozzles move relative to each other in these cam grooves, so that the angle of each nozzle is guided (regulated) so as to face the axis side (inside). With such a configuration, the orientation adjustment of the plurality of coolant nozzles 201, 202, 203, 204, 205, and 206 can be automated, so that it becomes possible to discharge the coolant to the optimum position, without spending time to adjust the nozzles when the tool 150 is replaced with another tool.

As described above, according to the coolant nozzle device 200 of the present embodiment, under control of the nozzle angle control unit (not shown) in the CNC device 70 (see FIG. 1), an unillustrated motor is rotated from the length and diameter information of the tool 150 [see FIG. 6 (A) and (B)], and the shaft 240 is thereby rotated to transmit power. Further, as shown in FIG. 6 (A) and (B), the coolant nozzles 201, 202, 203, 204, 205 and 206 are moved to the optimum positions by control in accordance with the length and diameter of the tool 150 to discharge the coolant. From FIG. 5, by way of the plurality of gears 246a and 246b, the power transmitted from the shaft 240 turns the gear 270 having the cam grooves 211,212,213, 214, 215 and 216 into which a plurality of coolant nozzles 201, 202, 203, 204, 205 and 206 are inserted, respectively. Finally, the plurality of coolant nozzles 201, 202, 203, 204, 205 and 206 are thereby simultaneously moved. Besides, in the present embodiment, the shaft 240 is a flex (flexible) shaft, and a gear mechanism is connected to the shaft 240 via a speed reducer 280. Further, although only a part of the shaft 240, which is a flex (flexible) shaft, is shown on the side connected to the speed reducer 280, the shaft 240 has a predetermined length including the other side connected to the rotating shaft of the motor attached to the machine tool 100. In this way, since the shaft 240 is composed of a flex (flexible) shaft having a predetermined length, adjusting the length of the shaft 240 or the like can bring an advantage that the degree of freedom of the position of attaching a motor (not shown) rotationally driving the shaft 240 to the machine tool 100 is increased.

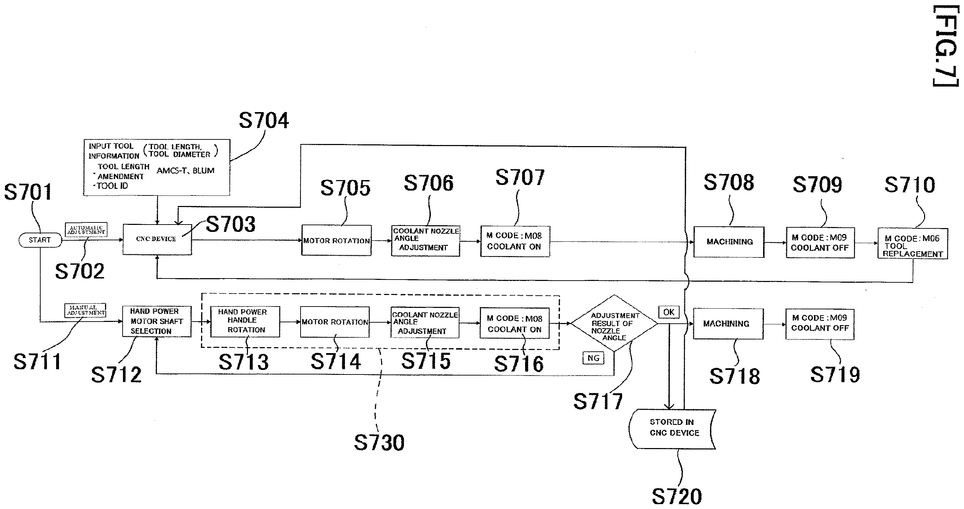

Next, description will proceed to the operation flow of the coolant nozzle device of the machine tool according to the present embodiment. FIG. 7 is an operation procedure in processing of the coolant nozzle device of the present embodiment.
First, when the operation in the machining of the coolant nozzle device is started (S701), in the automatic adjustment flow (S702), the correction value of the tool length, and the like as well as the tool information including the tool length and the tool diameter together with the tool ID are input to the CNC device 70 (see FIG. 1) shown in S703 (S704), and the above-mentioned motor is rotated in accordance with the tool length and tool diameter of this new (replaced) tool (S705). Thereby, the rotation (gear) plate 210 rotates by a predetermined angle, and the angle adjustment of the coolant nozzle is executed (S706). Then, while the coolant is turned on, that is, the coolant is discharged from the coolant nozzles 201, 202, 203, 204, 205, and 206, respectively (S707), the work is machined by the tool (S708). When the processing is completed, the coolant is turned off, that is, the discharge of the coolant is stopped (S709). If necessary, the tool is replaced (S710), and the process returns from S703. On the other hand, in the coolant nozzle device of the present embodiment, the nozzle angle can be manually adjusted by an operator or the like. In the manual adjustment flow (S711) by the operator or the like, the motor shaft is selected by the manual handle (hand power) (S712), and the handle is rotated (S713). As a result, the corresponding motor rotates (S714), so that the rotation (gear) plate 210 described above rotates at a predetermined angle, and the angle of the coolant nozzle is adjusted (S715). Then, the coolant is turned on, that is, the coolant is discharged from the coolant nozzles 201, 202, 203, 204, 205, and 206, respectively (S716). Here, the operator sees the adjustment result of the nozzle angle (S717), and if it is OK, the work is machined by the tool (S718). When the processing is completed, the coolant is turned off, that is, the discharge of the coolant is stopped (S719). If the nozzle angle adjustment result is NG when viewed from the operator in S717, the process returns to the process from S712. As described above, in the coolant nozzle device of the present embodiment, the nozzle angle can also be manually adjusted by an operator or the like. That is, the mechanism and structure of the coolant nozzle device remain the same, but by changing the NC program setting, the following three adjustments can be made by the operation of an operator or the like. First, an operator or the like operates a manual handle provided on a handle portion (not shown) connected to the machine tool 100 by a curl cord or the like, so that a nozzle can be swung to a desired (stepless) angle within a structurally permissible range. Secondly, the nozzle angle can be specified by the M code on the NC. Thirdly, the tool length and tool diameter can be input for each tool that can be mounted on the ATC on the NC screen. By inputting the desired nozzle angle on the NC screen, the nozzle angle can be specified in accordance with the tool to be replaced by the ATC. Further, by inputting and specifying the desired nozzle angle as a range (for example, 0 to 15 degrees) on the NC screen, the gear plate 210 is rotated and inverted at high speed within the specified nozzle angle range. This makes it possible to swing the nozzle angle (reciprocating reversal). As a result, the coolant can be discharged in a continuous wavy shape. Here, the teaching operation will be described with reference to FIG. 7. The device of the present invention is capable of teaching operation, and a series of flows surrounded by a broken line in S730 correspond to the teaching operation. Then, if the series of teaching operations surrounded by the broken line in S730 is OK, the CNC device 70 (see FIG. 1) stores the teaching operation (S720). The stored operation is stored in the CNC device 70 with an identification code for management. If necessary, the teaching operation is called by this identification code. The teaching operation is loaded on the CNC device 70 and automatically operated by the CNC device 70.

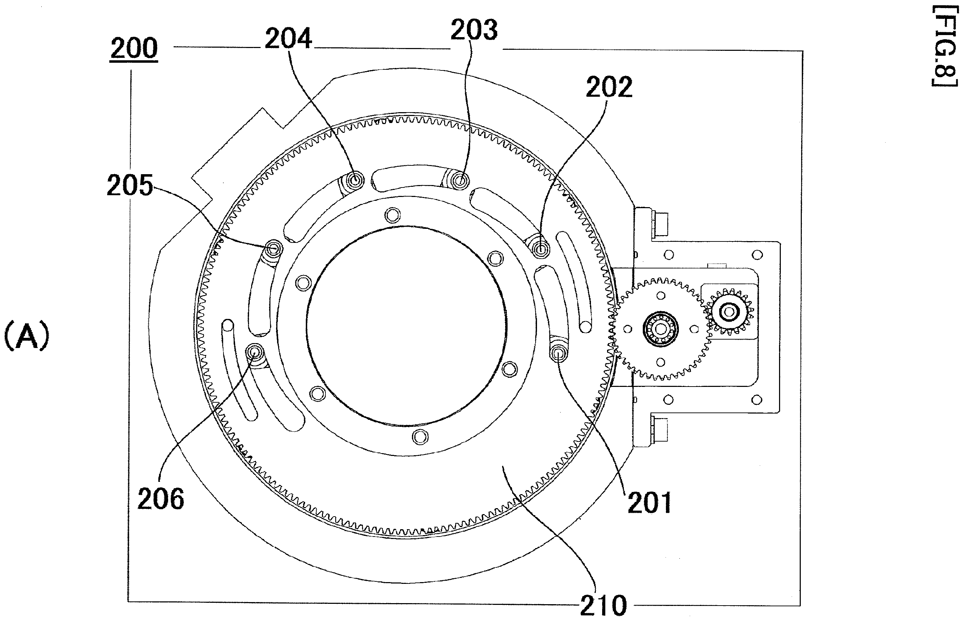

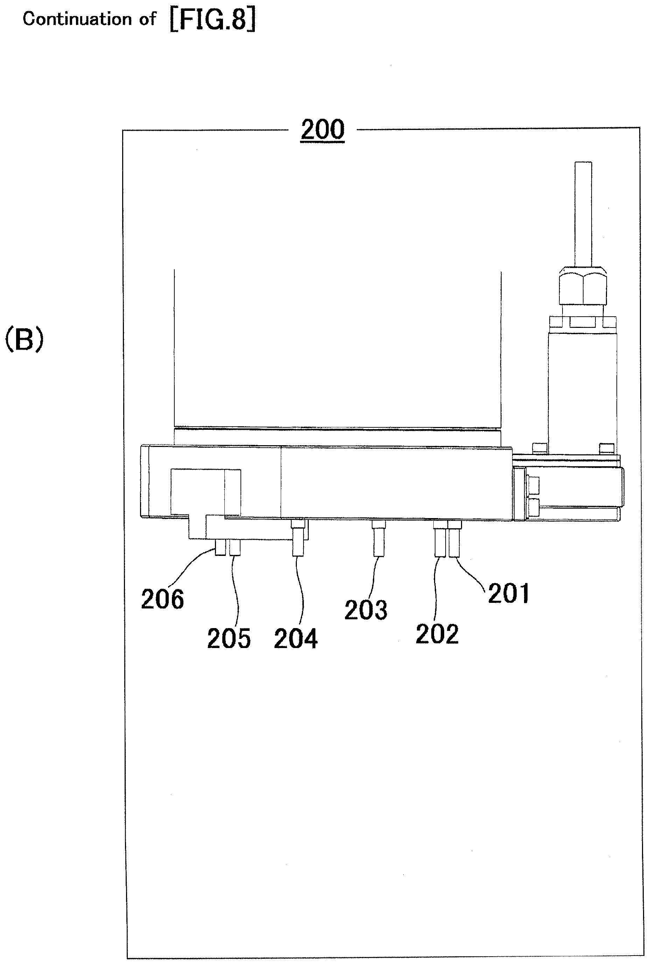

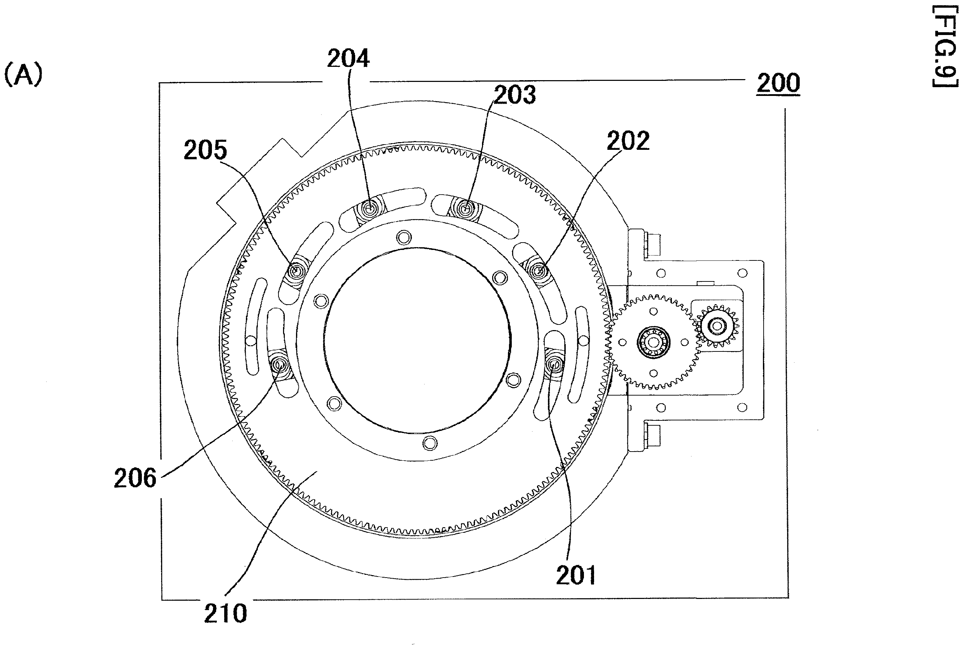

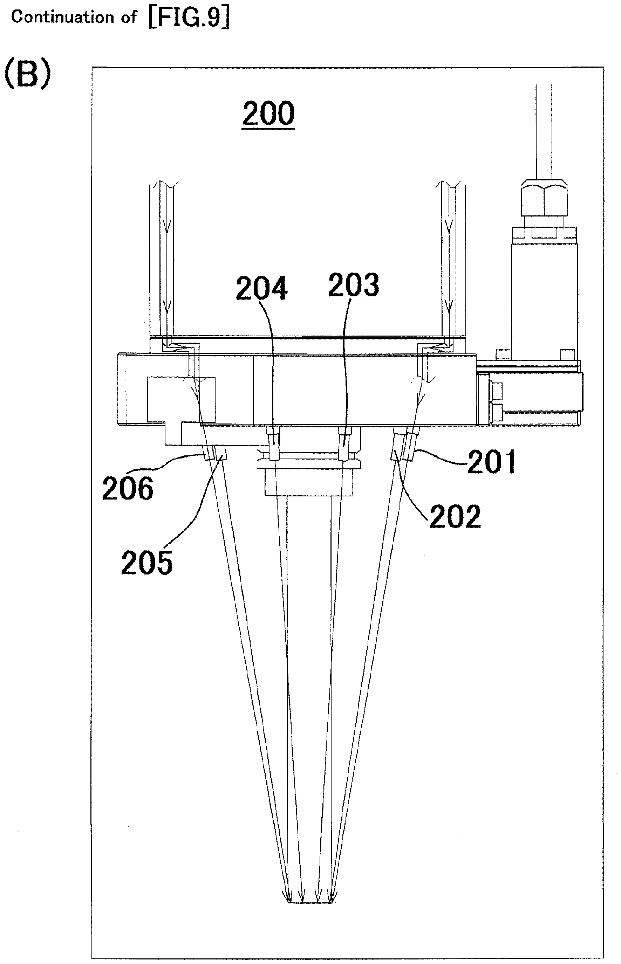

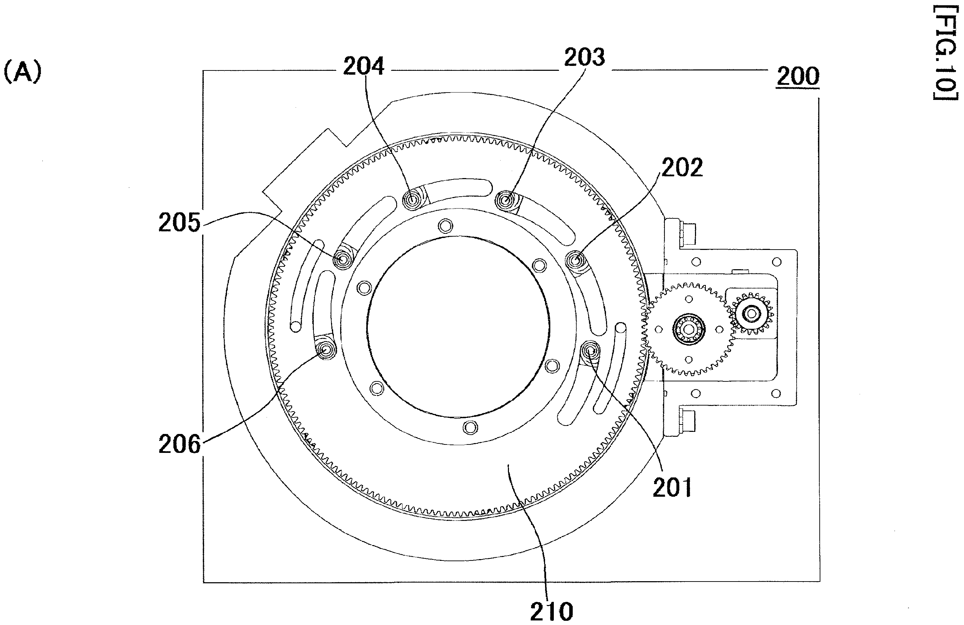

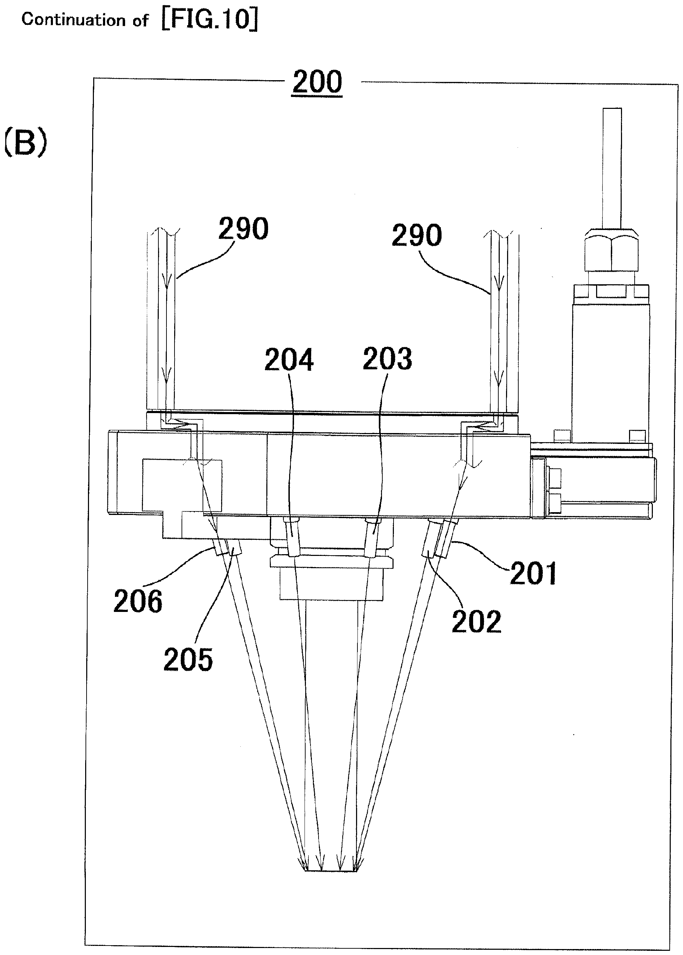

Subsequently, the correspondence between the rotation angle of the gear plate 210 and the nozzle angle in the coolant nozzle device 200, which is the greatest feature of the present invention, will be described. In FIGS. 8 to 10 below, the correspondence between the positions of the coolant nozzles 201, 202, 203, 204, 205, and 206 in each cam groove (reference number omitted) in FIG. 8A and the respective angles of the coolant nozzles 201 to 206 in FIG. 8B is important. That is, in the coolant nozzle device 200 according to the present embodiment, as shown in FIG. 8 (A), when the gear plate 210 is at a position of 0 degree in the rotation angle in the cross-sectional view of the nozzle variable mechanism, as shown in FIG. 8 (B), the nozzle angle is at a position of 0 degrees in the external front view of the coolant nozzle device 200. Further, as shown in FIG. 9 (A), when the gear plate 210 is at a position of a rotation angle of 20 degrees in the cross-sectional view of the nozzle variable mechanism, as shown in FIG. 9 (B), the nozzle angle is at a position of 10 degrees in the external front view of the coolant nozzle device 200. Further, as shown in FIG. 10 (A), when the gear plate 210 is at a position of a rotation angle of 30 degrees in the cross-sectional view of the nozzle variable mechanism, as shown in FIG. 10 (B), the nozzle angle is at a position of 15 degrees in the external front view of the coolant nozzle device 200.

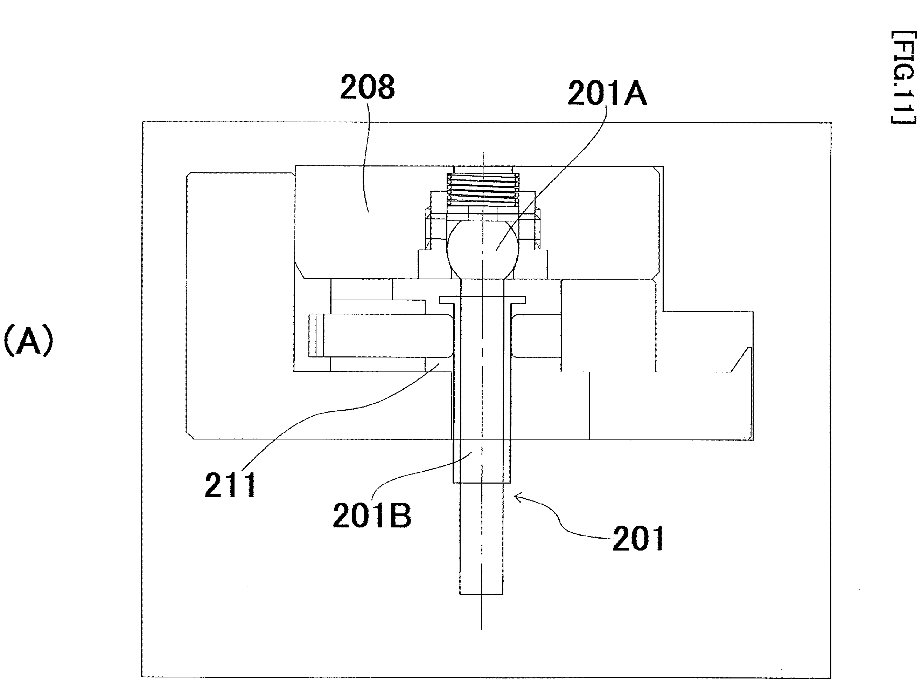

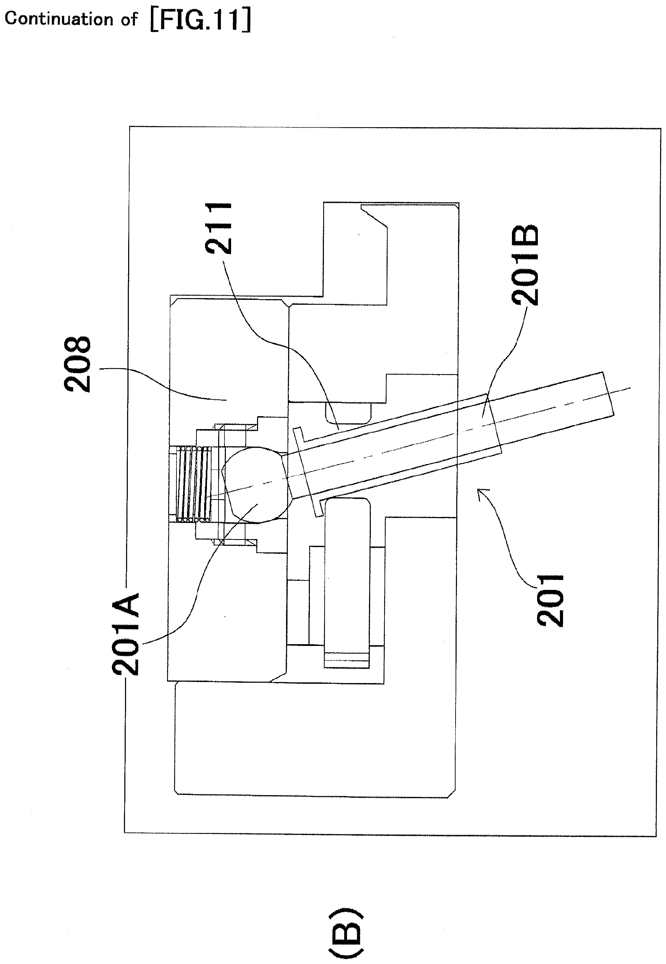

FIG. 11 is a cross-sectional view of the nozzle portion of the coolant nozzle device 200, FIG. 11A is a cross-sectional view of the nozzle portion in the state of FIG. 8 (gear plate rotation angle 0 degree, nozzle angle 0 degree) while FIG. 11B is a cross-sectional view of the nozzle portion in the state of FIG. 10 (gear plate rotation angle 30 degrees, nozzle angle 15 degrees). As shown in FIGS. 11A and 11B, the base portion 201A of each nozzle (here, only the coolant nozzle 201 is shown) has a sliding surface with the nozzle bearing portion 208 formed in a substantially spherical shape. Therefore, the cylindrical nozzle tube portion 201B can easily change its direction due to the relative movement in the cam groove 211 described above. That is, as a major feature of the present embodiment, first, as described above, the cam grooves 211, 212, 213, 214, 215, and 216 are not formed to have uniform groove widths, but formed in a curved shape that inclines toward the core side. Thereby, due to the relative movement of each nozzle in each cam groove, the angle of each nozzle is guided (regulated) so as to face the axis core side (inside). Secondly, at the base of each nozzle, since the sliding surface with the nozzle bearing portion is formed in a substantially spherical shape, the orientation of the cylindrical nozzle tube portion is easily changed by the relative movement of each nozzle in each cam groove.

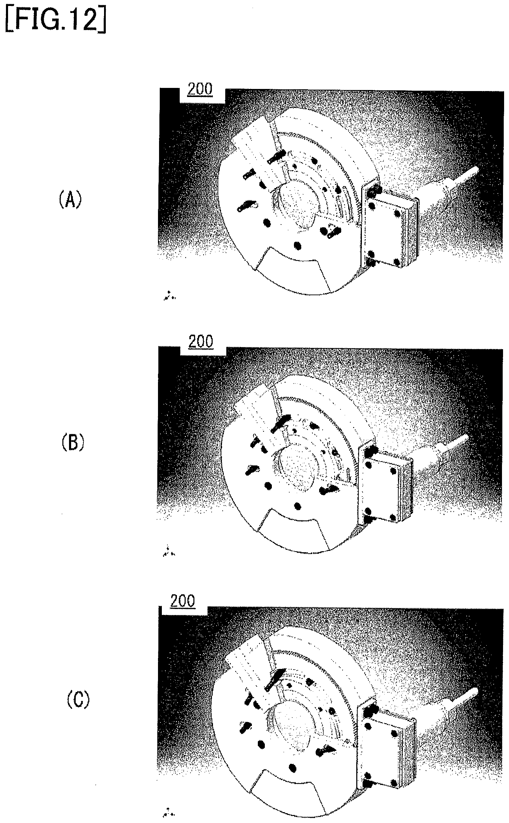

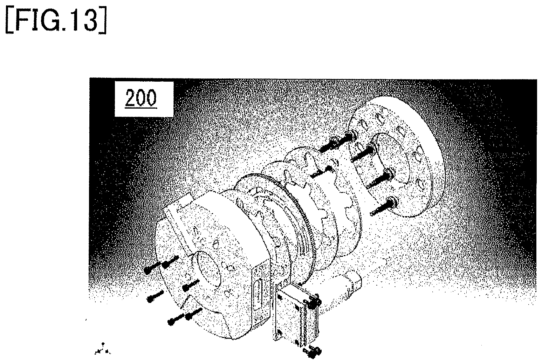

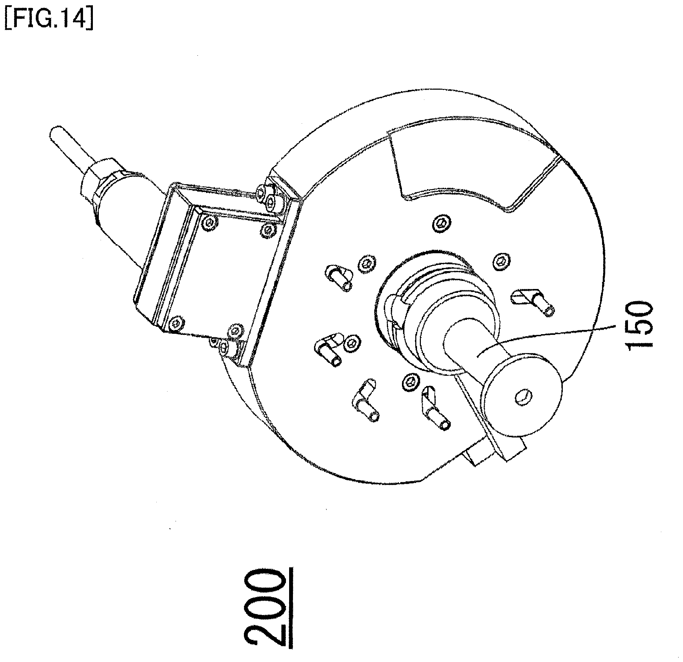

The configuration and operation described above are shown by an external perspective view or the like. FIG. 12A, 12B and 12C are external front views of the coolant nozzle device 200 and show differences in nozzle angles. FIG. 12A is a state in which the gear plate rotation angle is 0 degrees and the nozzle angle is 0 degrees, FIG. 12B is a state in which the gear plate rotation angle is 20 degrees and the nozzle angle is 10 degrees, and FIG. 12C is a state in which the gear plate rotation angle is 30 degrees and the nozzle angle is 15 degrees. Further, FIG. 13 is an exploded perspective view of the variable nozzle unit of the coolant nozzle device 200. Furthermore, FIG. 14 is a perspective view of a state in which the tool 150 is attached to the coolant nozzle device 200.

In the above-described embodiment, the shaft 240 is composed of a flex (flexible) shaft, but it is needless to say that the shaft 240 may not be flex (flexible). Further, although a motor (not shown) is used as a rotation driving means (actuator) for rotating the gear plate 210, a means other than the motor may be used as the actuator. The gear plate may be rotated by using, for example, air (pneumatic device). Further, although the gear plate is rotated from the motor as an actuator via a gear (drive mechanism), the gear plate may be rotated, for example, by a DD (Direct Drive) motor. In that case, it is not necessary to rotate the gear plate through a gear (drive mechanism). In the above embodiment, when the tool is replaced, the gear plate 210 is rotated to adjust the nozzle angle. However, when the same tool is used for machining, the gear plate 210 may be rotated and reversed at high speed, so that the coolant may be discharged in a wavy shape by rotating and reversing the nozzle to oscillate the nozzle angle (reciprocating reversal).

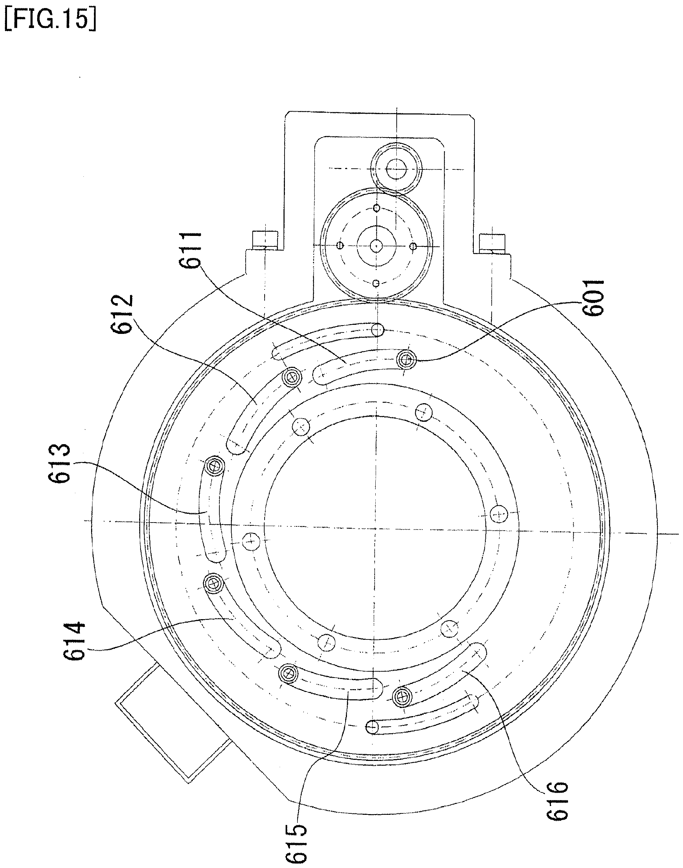

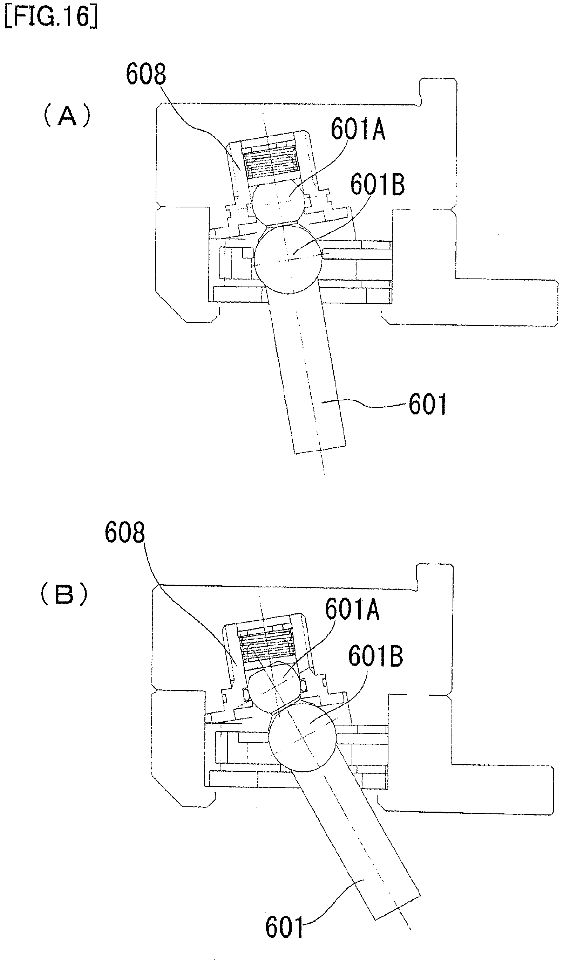

Herein, other embodiment of the present invention will be described. In the embodiment described above, as shown in FIG. 5 and the like, the cam grooves 211, 212, 213, 214, 215, and 216 are not formed to have a uniform groove width, but are formed so as to expand slightly toward the axis side. However, in the other embodiment of the present invention, the cam grooves 611, 612, 613, 614, 615, and 616 are formed to have a uniform groove width throughout each of a total groove length, as shown in FIG. 15. The cam grooves 611, 612, 613, 614, 615, and 616 having such a uniform groove width over the entire length are formed in a curved shape that is inclined toward the axis side.
The angle of each nozzle (601 etc.) is configured to be guided (regulated) so that the angle faces the axis side (inside) by the relative movement of the nozzles in each of the cam grooves 611, 612, 613, 614, 615, 616 formed in a curved shape that inclines toward the axis side. Further, in the other embodiment, as shown in FIGS. 16A and 16B, each nozzle (here, only the coolant nozzle 601 is shown) has not only a sliding surface 601A with the nozzle bearing portion 608 and the like but also a sliding surface 601B with the cam groove 611 and the like. Not only the sliding surface 601A is formed in a substantially spherical shape, but also the sliding surface 601B is formed in a substantially spherical shape. Accordingly, like a ball bearing, it is easy to slide in the cam groove (611 etc.), and the cylindrical nozzle 601 etc. is easy to change the direction thereof. With such a configuration, it is possible to automate the adjustment of the orientations of a plurality of coolant nozzles 601 and the like, so that when the tool is replaced with another tool, the coolant is discharged to the optimum position without taking time for nozzle adjustment.

### Industrial applicability

The present invention can be widely applied to machine tools such as machining centers equipped with a fluid nozzle device, regardless of whether it is a vertical type or a horizontal type. Conventionally, even if ATC is standard equipment in a machining center and tool change is performed automatically, it is necessary for an operator to monitor whether or not the coolant is properly applied to the machined part by being near the machine. In particular, in the processing of difficult-to-cut materials, for which demand has been increasing in recent years, it is extremely important whether or not the coolant accurately hits the processed part for lubrication and cooling. This has become an obstacle in order that unmanned machining center operation may be realized. In this sense, the fluid nozzle device of the present invention greatly contributes to the realization of unmanned (operation) of the machining center. Further, in the fluid nozzle device of the present invention, the coolant can be accurately discharged to the machined portion by automatically adjusting the nozzle angle, so that the tool life can be extended. In particular, in the above-mentioned machining of difficult-to-cut materials, the tool may become unusable in an extremely short time unless the coolant accurately hits the machined portion, so that the device of the present invention has a great merit of extending the tool life. Since the present invention is characterized in that the direction of the nozzle is automatically adjusted, it can be used not only for coolant but also for air discharge as a fluid. In addition, the inventors think that the present invention may be applicable to automatic adjustment of the laser irradiation angle in laser processing.

### Description of numerals

51 spindle, 51L bottom side, 60 automatic tool changer, 70 CNC device, 100 machine tool, 150 tool, 200 coolant nozzle device, 201, 202, 203, 204, 205, 206, 601 coolant nozzle, 210 rotating (gear) plate, 211, 212, 213, 214, 215, 216, 611, 612, 613, 614, 615, 616 cam groove, 220 drive mechanism

## Claims

1. In a machine tool which is provided with a plurality of types of tools having different tool lengths and / or tool diameters, and in which the tools attached to the spindle can be exchanged between the plurality of types of tools, the fluid nozzle device having a plurality of fluid nozzles provided in an annular shape around the spindle core and spaced apart from each other toward the tip of the tool, and capable of discharging fluid from the plurality of fluid nozzles, comprising;
a rotating plate attached around the spindle core and capable of being rotatably controlled, and having a plurality of curved cam grooves which are formed corresponding to each of the plurality of fluid nozzles and which regulate the discharge angle of each of the fluid nozzles and through which the fluid nozzles are provided so that the tool protrudes toward the tip of the tool;
driving means for rotatably driving the rotating plate;
a control unit for rotating the rotating plate by a predetermined angle in response to replacement of the tool;
wherein the control unit receives a tool change command of the machine tool and rotates the rotating plate by a predetermined angle via the driving means, so that the plurality of cam grooves may slide around the spindle core to change the discharge angle of each of the fluid nozzles.

2. The fluid nozzle device as claimed in claim 1, having a servomotor as a driving means for rotating and driving the rotating plate, and a plurality of gears that mesh with the rotating shaft of the servomotor, **characterized in that** the fluid nozzle device automatically adjusts the tip of the coolant nozzle by the rotation control of the servomotor in response to length and diameter of the tool.
